**Europäisches Patentamt**

(19) **European Patent Office**

**Office européen des brevets**

(11) Numéro de publication: **0 060 190 B1**

## (12) FASCICULE DE BREVET EUROPEEN

(45) Date de publication du fascicule du brevet:
02.01.85

(51) Int. Cl.³: **H 02 M 3/335, H 02 H 7/122**

(21) Numéro de dépôt: **82400370.1**

(22) Date de dépôt: **03.03.82**

(54) **Perfectionnements aux convertisseurs de courant continu.**

(30) Priorité: **09.03.81 FR 8104591**

(43) Date de publication de la demande:
**15.09.82 Bulletin 82/37**

(45) Mention de la délivrance du brevet:
**02.01.85 Bulletin 85/1**

(84) Etats contractants désignés:
**DE GB IT**

(56) Documents cités:
**DE - A - 2 722 814**
**FR - A - 2 246 002**
**US - A - 3 873 903**
**US - A - 3 914 679**
**US - A - 3 927 352**
**US - A - 4 095 128**
**US - A - 4 177 509**

**IBM TECHNICAL DISCLOSURE BULLETIN, vol. 22, no. 8A, janvier 1980, New York (US), J.K. RADCLIFFE "Switching regulator detector", pages 3179 et 3180**
**RCA APPLICATION NOTE, AN-4509, février 1971, Somerville (US), R.S. MYERS: "Compact 5 volt power supplies using high-voltage power transistors", pages 1-8**

(73) Titulaire: **P.S.A. Etudes & Recherches, 75, Avenue de la Grande-Armée, F-75761 Paris Cedex 16 (FR)**

(72) Inventeur: **Menard, Christian, 10, rue du Leon, F-78310 Maurepas (FR)**
Inventeur: **Meuleman, Jean Jacques, 49, Avenue des Pierrots, F-91400 Orsay (FR)**

(74) Mandataire: **Fabien, Henri, PEUGEOT SA. DAT / BPI 18, rue des Fauvelles, F-92250 La Garenne-Colombes (FR)**

BUNDESDRUCKEREI BERLIN

## Description

L'invention a pour objet des perfectionnements aux convertisseurs de courant continu fournissant, à partir d'une source de tension continue non régulée, un courant continu de tension régulée. Le but de ces perfectionnements est d'améliorer la régulation et le rendement des convertisseurs auxquels ils s'appliquent qui sont du type dans lequel deux séries d'impulsions de commande en opposition de phase, de même durée régulée par comparaison de la tension de sortie du convertisseur à une tension de référence, sont élaborées par deux circuits identiques à une fréquence déterminée par un oscillateur et commandent chacune un élément de commutation électronique sensible à l'état logique qu'elles représentent, lesdits éléments de commutation déterminant le passage d'impulsions de courant alternativement dans chacun des enroulements primaires de deux transformateurs ou d'un transformateur à point milieu dont les enroulements secondaires sont reliés à un circuit d'utilisation par un dispositif de redressement et de filtrage double alternance.

Dans ce type de convertisseur lorsque la tension de la source est faible la durée des impulsions de commande est maximale et égale à 50% de leur période. Si le courant débité est important il peut se produire une superposition ou recouvrement des impulsions successives délivrées en opposition de phase aux enroulements primaires du fait du temps d'évacuation des charges accumulées dans les jonctions des éléments de commutation.

Cette superposition a pour inconvénients de perturber la régulation de la tension de sortie et de diminuer le rendement.

Le but principal de l'invention est d'éviter ces inconvénients en supprimant la possibilité de superposition des impulsions de commande.

Pour y parvenir un convertisseur selon l'invention se caractérise en ce qu'il comporte un circuit logique détectant, sur chacun des deux circuits élaborant les impulsions de commande en opposition de phase, la présence simultanée sur les bases des transistors d'un même état logique significative d'un recouvrement desdites impulsions et des moyens déterminant dans ce cas une chute de la tension de référence de manière à réduire la durée des impulsions.

Ce dispositif logique est avantageusement constitué d'une porte logique ET à deux entrées recevant chacune, respectivement un signal représentatif de l'état des deux séries d'impulsions et commandant un élément de commutation qui coupe la tension de référence appliquée à une entrée d'un dispositif de régulation délivrant un signal d'erreur fonction de l'écart entre la tension de sortie et la tension de référence.

De préférence l'élément de commutation est un transistor qui met à la masse ladite entrée du dispositif de régulation lorsque le signal de commande qu'il reçoit de la porte ET est significatif d'un recouvrement des impulsions de commande; d'autres caractéristiques de l'invention apparaîtront à la lecture de la description d'un exemple de réalisation non limitatif en référence aux dessins annexés et dans lesquels:

La figure 1 est un schéma synoptique montrant le principe de l'invention.

La figure 2 est le schéma de réalisation des circuits élaborant les impulsions de commande.

La figure 3 est le schéma de réalisation du dispositif de régulation et du circuit logique.

La figure 4 est le schéma de réalisation du dispositif de redressement et de dispositifs de sécurité d'entrée et de sortie.

La figure 5 représente les chronogrammes des signaux de commande.

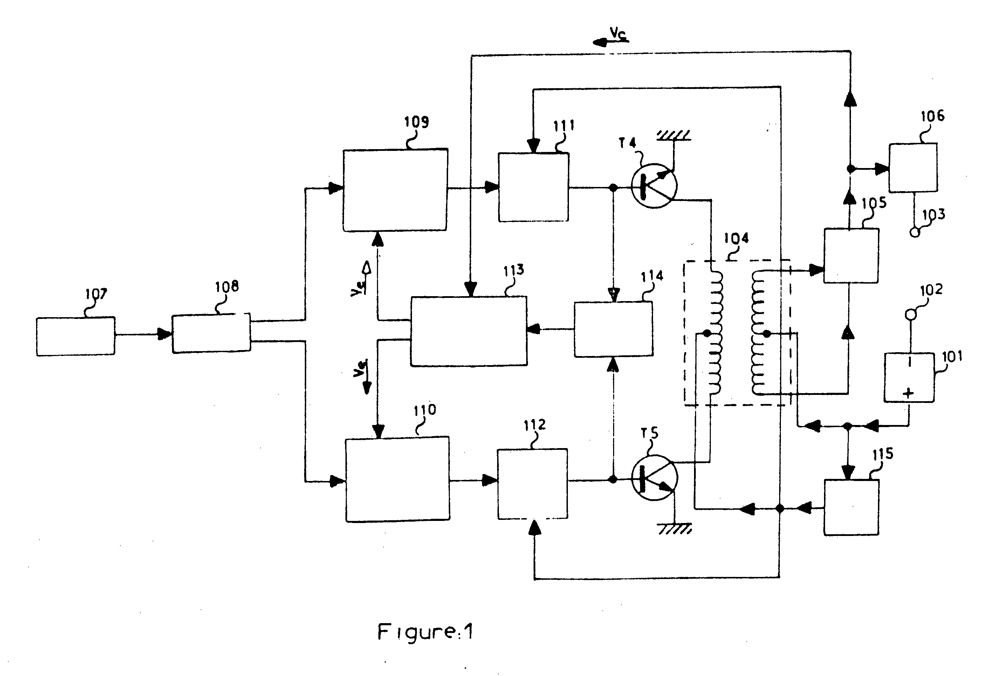

Le principe d'un convertisseur de courant continu, conforme à l'invention, va être exposé en référence au schéma synoptique de la Fig. 1.

A partir d'une source de courant continu de tension Va non régulée, constituée par une batterie d'accumulateurs 101, le convertisseur élabore et fournit à un circuit d'utilisation, entre la borne négative 102 de la batterie 101 et la borne de sortie 103, un courant continu de tension régulée Vc.

La tension Vc résulte de l'addition à la tension de la batterie Va d'une tension Vb fournie par le secondaire d'un transformateur 104 à point milieu relié à la borne positive de la batterie 101.

Chaque enroulement du primaire du transformateur 104 est alimenté en impulsions rectangulaires de même durée en opposition de phase. La durée des impulsions est régulée en boucle fermée par action sur la tension Vb, ce qui limite les pertes de conversion.

Le courant fourni par le secondaire du transformateur 104 est redressé et filtré dans un circuit redresseur 105, puis délivré à la borne de sortie 103 à travers un dispositif de protection 106 contre les courts-circuits.

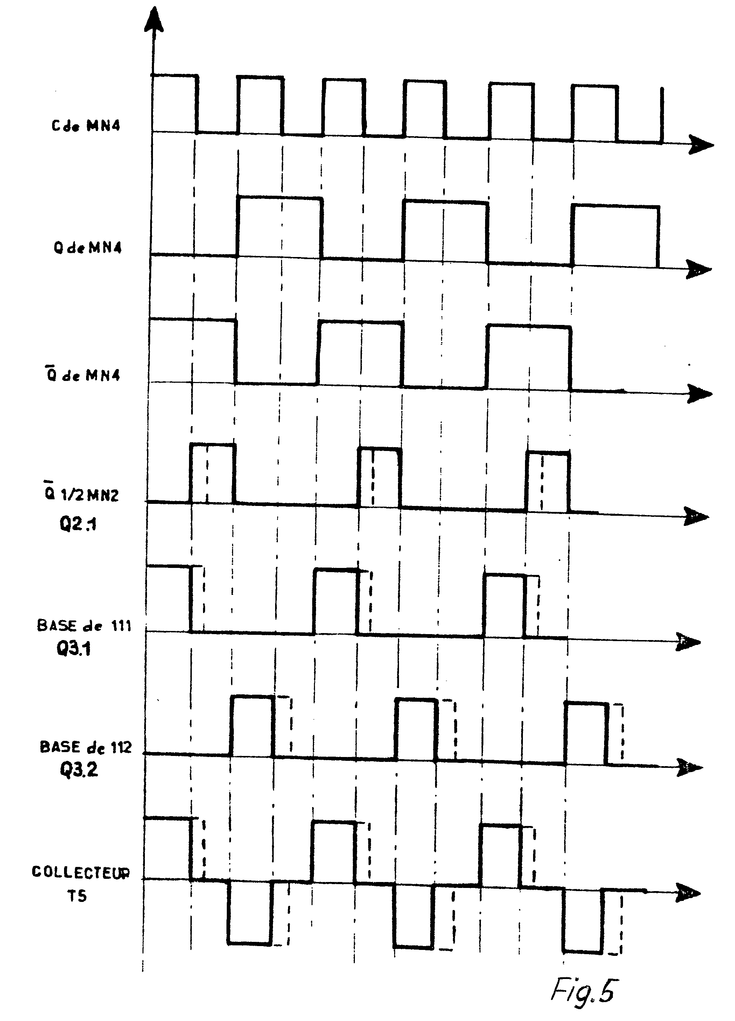

Un oscillateur 107 fournit des impulsions rectangulaires C (chronogramme en Fig. 5) de largeur et fréquence constantes. Un circuit diviseur de fréquence 108 divise la fréquence des impulsions C par deux et délivre des impulsions Q et Q̄ complémentaires à deux voies d'élaboration des alternances fournies au primaire du transformateur 104. Les deux voies sont identiques et constituées d'un circuit de réglage 109 ou 110 de la longueur des impulsions Q3.1 ou Q3.2 délivrées à un dispositif de commande de puissance 111 ou 112 d'un transistor de puissance T4 ou T5. Les collecteurs des transistors T4 et T5 sont reliés chacun à une extrémité du primaire du transformateur 104 et leur émetteur à la masse.

Les circuits de réglage 109 et 110 sont pilotés par un dipositif de régulation 113 en fonction de la tension Vc de sortie et d'un signal fourni par un circuit logique 114. La durée des impulsions Q3.1 et Q3.2 est une fraction de la durée des impulsions Q ou Q̄.

Le circuit logique 114 est à deux entrées recevant chacune un signal représentant l'état logique des impulsions de commande des transistors de puissance T4 et T5. Il fournit au dispositif de régulation un signal de niveau logique 1 en cas de recouvrement des impulsions.

Le dispositif de régulation 113 compare la tension Vc à une tension de référence Vr et délivre un signal d'erreur Ve aux circuits de réglage 109 et 110. Le niveau 1 du signal du circuit logique 114 détermine une chute de la tension de référence de manière à modifier le signal d'erreur dans le sens provoquant une réduction de la durée des impulsions Q3.1 et Q3.2, ce qui élimine la possibilité de recouvrement de ces impulsions et donc le chevauchement des alternances de courant dans le primaire du transformateur 104.

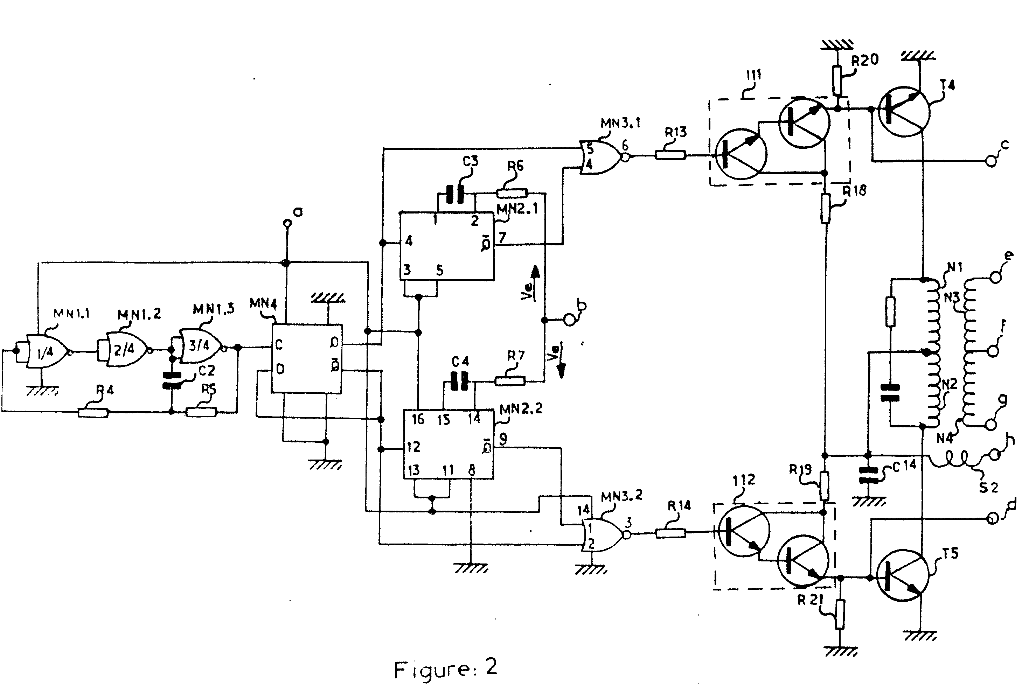

On se réfèrera, maintenant, à la Fig. 2 pour la description détaillée de la réalisation et du fonctionnement des dispositifs d'élaboration des impulsions à partir du signal d'erreur Ve.

L'alimentation en basse tension stabilisée des différents circuits s'effectue à partir de la borne a.

L'oscillateur 107 est un oscillateur à trois portes logiques NOR référencées respectivement MN1-1, MN1-2 et MN1-3 montées en série. Les résistances en série R4 et R5 relient la sortie de MN1-3 à l'entrée de MN1-1. Un condensateur C2 relie l'entrée de MN1-3 et la jonction des résistances R4 et R5. La fréquence d'oscillation est déterminée par les valeurs de R4, R5 et C2.

On choisira généralement la fréquence de 40 kHz pour obtenir, après division, la fréquence de 20 kHz.

Le diviseur de fréquence 108 est une bascule MN4 bistable délivrant à ses sorties les impulsions Q et Q̄ complémentaires de rapport cyclique 1/2 et de fréquence 20 kHz.

Les circuits de réglage 109 et 110 sont identiques et constitués d'un circuit monostable MN2-1 ou MN2-2 et d'une porte logique NOR MN3-1 ou MN3-2.

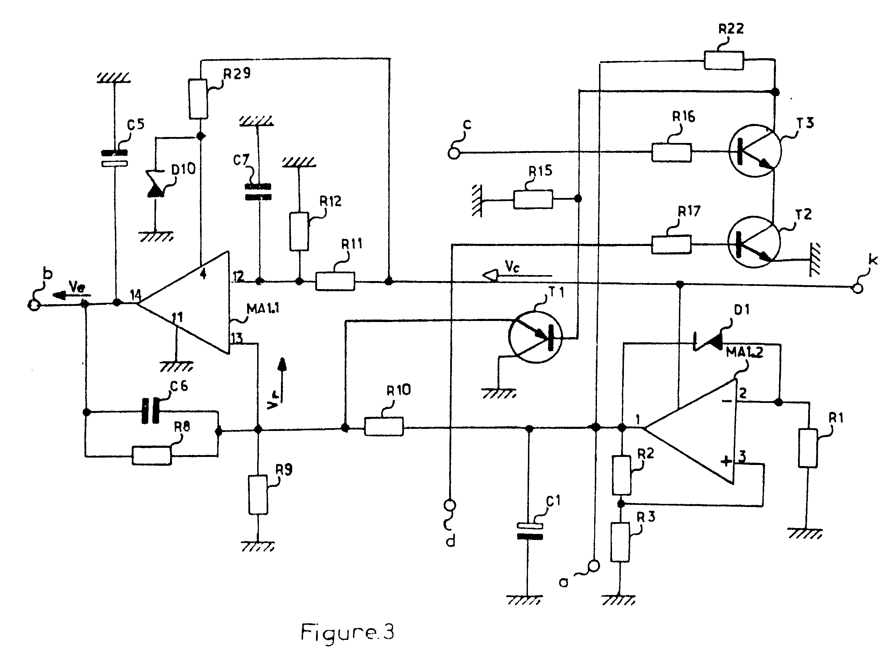

L'ensemble des deux monostables MN2-1 et MN2-2 est réalisé sous forme d'un circuit intégré unique dont les broches sont référencées 1 à 14. MN2-1 reçoit en 4 le signal Q de la bascule bistable 8 et MN2-2 en 12 le signal Q̄. Le signal d'erreur Ve pris à la borne b du dispositif de régulation 113 détaillé en Fig. 3 est fourni à travers les résistances identiques R6 et R7 respectivement en 2 à MN2-1 et en 14 à MN2-2.

1 et 2 sont reliées par une capacité C3 et 14 et 15 par une capacité C4. Les capacités C3 et C4 sont identiques.

La durée »t« des impulsions Q2.1 et Q2.2 recueillies respectivement en 7 de MN2-1 et en 9 de MN2-2 est fonction du signal d'erreur et égale à:

$$t = 0,2 R6 C3 \, \text{Log} \, (Ve)$$

Sur chaque voie ces impulsions Q2.1 et Q2.2 sont respectivement appliquées à une entrée des portes NOR et référencées MN3-1 et MN3-2, l'autre entrée de ces portes recevant l'impulsion Q ou Q̄. On obtient ainsi à la sortie de MN3-1 et MN3-2 respectivement les impulsions Q3.1 et Q3.2 en opposition de phase (voir chronogramme Fig. 5) dont la durée est au plus égale à celle de l'impulsion initiale Q ou Q̄. La durée de Q3.1 et Q3.2 est d'autant plus faible que le signal d'erreur Ve est grand.

Les dispositifs de commande de puissance 111 et 112, du type DARLINGTON reçoivent à leur entrée les impulsions de commande Q3.1 et Q3.2 respectivement à travers les résistances R13 et R14.

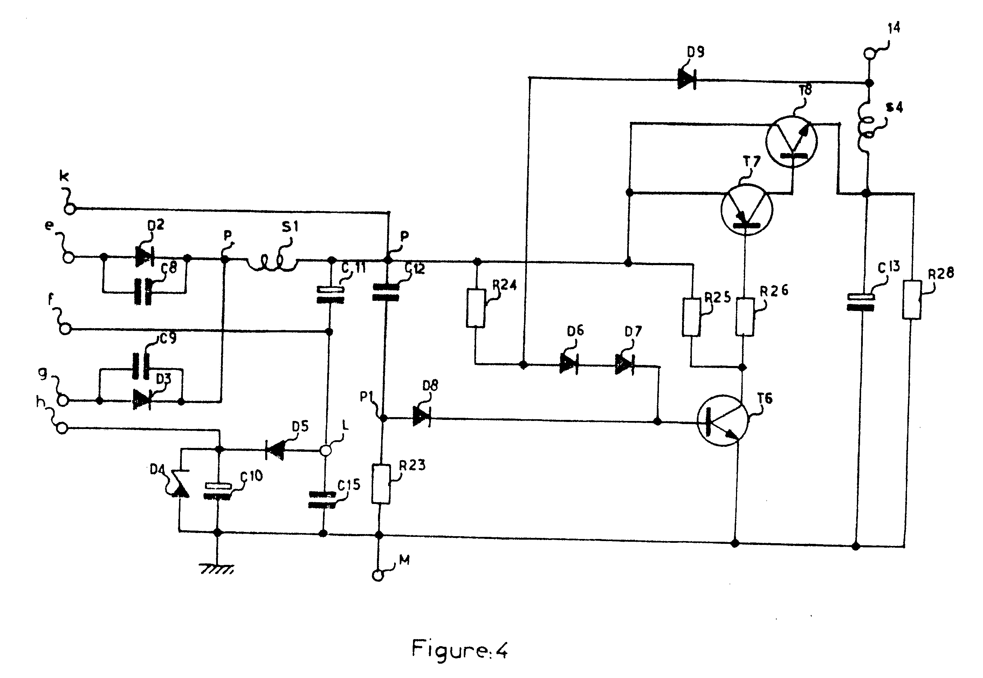

Les DARLINGTON sont alimentés à travers les résistances R18 et R19 à la borne h d'un dispositif de sécurité d'entrée 115 relié à la borne positive de la batterie 101. Cette alimentation est filtrée par la self S2 et le condensateur C14. Le dispositif 115 est détaillé en Fig. 4.

Les impulsions de commande, amplifiées par les DARLINGTON, sont respectivement appliquées aux bases des transistors de puissance T4 et T5 dont le courant de base, pour une tension d'alimentation donnée est fixé par les résistances R20 et R21. Les transistors T4 et T5 sont choisis pour leur rapidité de commutation et leur faible Vce saturation à fort courant afin d'accroître le rendement. Enfin, les bornes c et d sont reliées aux deux entrées du circuit logique 114.

Le transformateur élévateur de tension 104 est du type toroïdal dont le rendement est meilleur que celui des transformateurs en U ou en E. Ce type de transformateur présente également un encombrement plus faible et un rayonnement moindre. Le point commun des enroulement N1 et N2 du primaire du transformateur 104 est relié à la borne positive de la batterie 101 à travers le dispositif de sécurité 115 (borne h).

Le point commun des enroulements N3 et N4 constituant le secondaire du transformateur 104 est relié directement par la borne f à la borne positive de la batterie. Enfin, les extrémités du secondaire sont reliées par les bornes e et g au circuit redresseur 105.

On se réfèrera maintenant à la Fig. 3 où sont détaillés les constituants du dispositif de régulation 113 et du circuit logique 114. Le dispositif de régulation comporte un comparateur MA1.1 et un amplificateur opérationnel MA1-2. La borne k reçoit la tension régulée Vc prise au niveau du dispositif de sécurité 106 décrit ci-après en référence à la Fig. 4.

L'amplificateur opérationnel MA1-2, alimenté par la tension régulée Vc, fournit la tension de référence stabilisée Vr à une entrée du comparateur MA1-1 et à la borne a pour l'alimentation des circuits décrits ci-dessus en référence à la Fig. 2. Les résistances R1, R2, R3 et la diode Zener D1 sont montées de façon habituelle.

L'entrée 13 du comparateur MA1-1 reçoit la tension de référence Vr à travers une résistance R10, elle est reliée à la sortie en b par un condensateur C6 et une résistance R8 montés en parallèle, et à la masse par une résistance R9. L'entrée 12 du comparateur MA1-1 reçoit la tension Vc à réguler à travers une résistance R11, elle est reliée à la masse par, d'une part un condensateur C7 et, d'autre part, une résistance R12.

L'alimentation du comparateur MA1-1, mise à la masse par une diode Zener D10, s'effectue à la tension Vc à travers une résistance R29. Enfin, la sortie du comparateur MA1-1 est reliée à la masse par un condensateur C5.

Le circuit logique 114 alimenté en basse tension à travers la résistance R22 comporte une porte ET constituée par les transistors T2 et T3 dont les bases reçoivent à travers les résistances R16 et R17 un signal représentatif de l'état logique des impulsions de commande appliquées respectivement aux bases des transistors de puissance T4 et T5.

L'élément de commutation électronique qui coupe la tension de référence Vr appliquée à l'entrée 13 du comparateur MA1-1 est un transistor 11 dont la base est commandée par la sortie de la porte ET. Le transistor T1 lorsqu'il est conducteur met directement à la masse l'entrée en 13. De ce fait, la tension de référence devient nulle lorsqu'il y a recouvrement des impulsions de commande. Le signal d'erreur Ve délivré par le comparateur MA1-1 aux circuits de réglage 109 et 110 est brusquement augmenté et la durée des impulsions de commande est donc réduite, ce qui évite leur recouvrement.

Le circuit redresseur 105 et les dispositifs de sécurité vont maintenant être décrits en référence à la Fig. 4.

La borne L est reliée au pôle positif de la batterie 101. Le circuit redresseur 105 à double alternance est constitué de façon habituelle des diodes D2, D3, les condensateurs C8, C9 assurant le respect aux normes françaises concernant la protection des émissions de radio.

Les diodes D2 et D3 sont des diodes rapides à faible chute de tension.

La self S1 et le condensateur C11 assurent le lissage du courant délivré en P au dispositif de protection 106 contre les courts-circuits.

La tension régulée est délivrée à la borne k pour les besoins du convertisseur Fig. 3.

Le dispositif de protection 106 comporte essentiellement les transistors T6, T7, T8. Le transistor T6 est saturé par la résistance R24 et les diodes D6 et D7 reliant sa base à la sortie du circuit redresseur.

Son courant émetteur-collecteur est stable et R26 se trouvant réuni à la masse, le transistor T7 est alors saturé en permanence. Ce dernier a un courant émetteur-collecteur stable qui sature à son tour T8.

Celui-ci devenant passant achemine alors le courant de sortie à la borne 103 via la self S4. La self S4 permet de respecter les normes françaises concernant la protection des émissions radio.

Si un court-circuit se produit, la cathode de la diode D9 est à la masse ce qui bloque le transistor T6, R26 n'est alors plus relié à la masse et le transistor T7 se bloque bloquant le transistor T8.

Le convertisseur est alors isolé du circuit d'utilisation.

L'utilisation d'un étage NPN et d'un étage PNP permet d'obtenir un meilleur Vce.

La tension d'alimentation du primaire du transformateur 104 et des dispositifs de commande de puissance 111 et 112 est délivrée en h par le dispositif de sécurité 115 composé de la diode D5 placée entre le pôle positif de la batterie et la borne h, des condensateurs C10, C15 et de la diode Zener D4 reliée à la masse. Ce dispositif permet une régulation de la tension d'alimentation et surtout un écrétage évitant les surtensions pendant les périodes transitoires.

Le dispositif de protection 106 comporte en outre une cellule pour le démarrage. Elle est composée de la résistance R23 reliée à la masse et montée en série avec le condensateur C12 lui-même relié par son autre extrémité à la borne k, et une diode D8. L'anode de cette dernière est reliée au point P1 entre C12 et R23 et sa cathode à la base de T6. La diode D8 forme ainsi une porte OU avec les diodes D6, D7. Au démarrage ce circuit RC envoie par la diode D8 une impulsion positive sur la base de T6 rendant T7, T8 conducteurs et permettant ainsi le démarrage de la régulation.

**Revendications**

1. Convertisseur de courant continu fournissant à partir d'une source de tension continue (101) non régulée, un courant continu de tension régulée du type dans lequel deux séries d'impulsions de commande en opposition de phase, de même durée régulée par comparaison de la tension de sortie du convertisseur à une tension de référence, sont élaborées par deux circuits identiques (109, 111 et 110, 112) à une fréquence déterminée par un oscillateur (107) et commandent chacune un transistor de commutation (T4, T5) sensible à l'état logique qu'elles représentent, lesdits transistors de commutation (T4, T5) déterminant le passage d'impulsions de courant alternativement dans chacun des enroulements primaires (N1, N2) de deux transformateurs ou d'un transformateur (104) à point milieu dont les enroulements secondaires (N3, N4) sont reliés à un circuit d'utilisation par un dispositif de redressement et de filtrage (105) à double alternance, convertisseur caractérisé en ce qu'il comporte un circuit logique (114) détectant sur chacun des deux circuits (109, 111 et 110, 112) élaborant les impulsions de commande en opposition de phase, la présence simultanée, sur les bases des transistors (T4, T5), d'un même état logique significatif d'un recouvrement desdites impulsions et des moyens déterminant dans ce cas une chute de la tension de référence de manière à réduire la durée des impulsions.

2. Convertisseur de courant continu selon la revendication 1, caractérisé en ce que le circuit logique (114) est constitué d'une porte ET à deux entrées recevant chacune respectivement un signal représentatif de l'état des deux séries d'impulsions et commandant un élément de commutation (T1) qui coupe la tension de référence appliquée à une entrée d'un dispositif de régulation (113) délivrant un signal d'erreur fonction de l'écart entre la tension de sortie et la tension de référence.

3. Convertisseur de courant continu selon la revendication 2 caractérisé en ce que l'élément de commutation est un transistor (T1) qui met à la masse ladite entrée du dispositif de régulation (113) lorsque le signal de commande qu'il reçoit de la porte ET est significatif d'un recouvrement des impulsions de commande.

4. Convertisseur de courant continu selon l'une quelconque des revendications 1 à 3, caractérisé en ce que les éléments de commutation déterminant le passage des impulsions dans les enroulements du primaire (N1, N2) du transformateur (104) sont des transistors de puissance (T4, T5) à commutation rapide et à faible tension collecteur-émetteur Vce en saturation à fort courant, dont les bases qui ont pour une tension d'alimentation donnée un courant fixé par une résistance (R20, R21) reçoivent respectivement les impulsions des circuits qui les commandent.

5. Convertisseur de courant continu selon la revendication 4 caractérisé en ce que lesdits transistors de commutation (T4, T5) ont leur base reliée à une des deux entrées du circuit logique (114).

6. Convertisseur de courant continu selon l'une quelconque des revendications précédentes, caractérisé en ce que le pôle positif de la source de tension continue (101) est relié au point milieu des enroulements secondaires du transformateur 104, la tension de sortie étant la somme de la tension de la source et de la tension fournie par le convertisseur.

7. Convertisseur de courant continu selon la revendication 6 caractérisé en ce que la tension fournie par le convertisseur est régulée par une régulation en boucle modifiant la largeur des impulsions de commande en fonction d'un signal d'erreur issu de la comparaison d'une tension continue de référence créée par un amplificateur opérationnel MA1-2 et de la tension instantanée fournie au circuit d'utilisation.

**Patentansprüche**

1. Gleichstromumformer, der ausgehend von einer ungeregelten Gleichspannungsquelle (101) einen Gleichstrom mit geregelter Spannung liefert, in welchem mittels zweier identischer Schaltungen (109, 111 und 110, 112) zwei Steuerimpulsserien mit entgegengesetzter Phase, gleicher, durch Vergleich der Ausgangsspannung des Umformers mit einer Bezugsspannung geregelter Dauer, und mit einer durch einen Oszillator (107) bestimmten Frequenz erzeugt werden, und die jeweils einen Schalttransistor (T4, T5) steuern, der auf den von diesen dargestellten logischen Zustand anspricht, wobei diese Schalttransistoren (T4, T5) abwechselnd den Durchgang der Impulse in jeder der Primärwicklungen (N1, N2) von zwei Transformatoren oder einem Transformator (104) mit Mittelanschluß, deren (dessen) Sekundärwicklungen (N3, N4) über eine Vollweggleichrichtungs- und Filtervorrichtung (105) mit einer Verbraucherschaltung verbunden sind, bestimmen, gekennzeichnet durch, eine logische Schaltung (114), die die Steuerimpulse mit entgegengesetzter Phase erzeugt, und die in jeder der beiden Schaltungen (109, 111 und 110, 112) das gleichzeitige Anliegen eines identischen, ein Überlappen der Impulse kennzeichnenden logischen Zustandes an den Basen der Transistoren (T4, T5) erfaßt, und durch Mittel, die in diesem Fall einen Abfall der Bezugsspannung bestimmen, so daß die Dauer der Impulse verkürzt wird.

2. Gleichstromumformer nach Anspruch 1, dadurch gekennzeichnet, daß die logische Schaltung (114) ein UND-Gate mit zwei Eingängen aufweist, die jeweils ein den Zustand der beiden Impulsserien kennzeichnendes Signal empfangen und das ein Schaltelement (T1) steuert, das die an einem Eingang einer ein von dem Unterschied zwischen der Ausgangsspannung und der Bezugsspannung abhängiges Filtersignal liefernden Regelvorrichtung (113) anliegende Bezugsspannung unterbricht.

3. Gleichstromumformer nach Anspruch 2, dadurch gekennzeichnet, daß das Schaltelement ein Transistor (T1) ist, der den Eingang der Regelvorrichtung (113) an Masse legt, wenn das Steuersignal, das er vom UND-Gate empfängt, ein Überlappen der Steuerimpulse kennzeichnet.

4. Gleichstromumformer nach einem der Ansprüche 1 bis 3, dadurch gekennzeichnet, daß die den Durchgang der Impulse in die Primärwicklungen (N1, N2) des Transformators (104) bestimmenden Schaltelemente schnellschaltende Leistungstransistoren (T4, T5) sind, deren Kollektor-Emitter-Spannung bei Starkstromsättigung klein ist und deren Basen, durch die bei vorgegebener Speisespannung ein durch einen Widerstand (R20, R21) festgehaltener Strom fließt, jeweils die Impulse der sie steuernden Schaltungen empfangen.

5. Gleichstromumformer nach Anspruch 4, dadurch gekennzeichnet, daß die Basis der Schalttransistoren (T4, T5) jeweils an einem der beiden Eingänge der logischen Schaltung (114) geschaltet ist.

6. Gleichstromumformer nach einem der vorstehenden Ansprüche, dadurch gekennzeichnet, daß die positive Klemme der Gleichspannungsquelle (101) mit dem Mittelabgriff der Sekundärwicklungen des Transformators (104) verbunden ist, wobei die Ausgangsspannung gleich der Summe der Spannung der Spannungsquelle und der vom Umformer gelieferten Spannung ist.

7. Gleichstromumformer nach Anspruch 6, dadurch gekennzeichnet, daß die vom Umformer gelieferte Spannung mittels eines Regelkreises geregelt wird, der die Steuerimpulsbreite als Funktion eines sich aus dem Vergleich einer von einem Operationsverstärker (MA1-2) erzeugten Bezugs-Gleichspannung mit der augenblicklich an die Verbraucherschaltung gelieferten Spannung ergebenden Fehlersignals regelt.

**Claims**

1. D. C. converter which from a source of unregulated D. C. voltage (101) provides a D. C. current of regulated voltage of the kind in which two series of control pulses in phase opposition and of the same duration regulated by comparison of the output voltage of the converter with a reference voltage, are generated by two identical circuits (109, 111 and 110, 112) at a frequency determined by means of an oscillator (107) and each control a switching transistor (T4, T5) responsive to the logic state they represent, the said switching transistors (T4, T5) determining the passage of current pulses alternately in each of the primary windings (N1, N2) of two transformers or of one transformer (104) having a centre tap, of which the secondary windings (N3, N4) are connected to a utilisation circuit via a full wave rectifier and filter device (105), said converter being characterised in that it comprises a logic circuit (114) which, for each of the two circuits (109, 111 and 110, 112) generating the control pulses in phase opposition, detects the simultaneous presence on the bases of the transistors (T4, T5) of an identical logic state representing an overlap of the said pulses, and means which in this case establish a reduction of the reference voltage in such a manner as to reduce the duration of the pulses.

2. D. C. converter according to claim 1, characterised in that the logic circuit (114) comprises an AND gate having two inputs, each respectively receiving a signal representing the state of the two series of pulses and controlling a switching element (T1) which interrupts the reference voltage fed to an input of a regulator device (113) providing an error signal as a function of the difference between the output voltage and the reference voltage.

3. D. C. converter according to claim 2, characterised in that the switching element is a transistor (T1) which causes earthing of the said input of the regulator device (113) when the control signal it receives from the AND gate represents an overlap of the control pulses.

4. D. C. converter according to any one of claims 1 to 3, characterised in that the switching elements controlling the passage of the pulses into the primary windings (N1, N2) of the transformer (104) are power transistors (T4, T5) of the rapid switching kind and having a lower collector-emitter voltage at a high saturation current, of which the bases, which have for a given supply voltage a current determined by a resistor (R20, R21), receive respectively the pulses of the circuits which they control.

5. D. C. converter according to claim 4, characterised in that the said switching transistors (T4, T5) have their bases connected to one of the two inputs of the logic circuit (114).

6. D. C. converter according to any one of the preceding claims, characterised in that the positive terminal of the D. C. voltage source (101) is connected to the centre tap of the secondary windings of the transformer (104), the output voltage being the sum of the voltage of the source and of the voltage provided by the converter.

7. D. C. converter according to claim 6, characterised in that the voltage provided by the converter is regulated by means of a regulation loop modifying the width of the control pulses as a function of an error signal derived from the comparison of a D. C. reference voltage provided by an operational amplifier (MA1-2) with the instantaneous voltage supplied to the utilisation circuit.

Figure:1

7

Figure: 2

0 060 190

Figure.3

Figure: 4

0 060 190

Fig.5